# EUROPEAN PATENT APPLICATION

(11) **EP 1 641 059 A2**
(43) Date of publication of application: **29.03.2006**
(21) Application number: 05020732.3
(22) Date of filing: 22.09.2005
(51) Int. Cl.: H01M 2/10

(54) **Safety enhanced load carrying device and method**

(30) Priority: 24.09.2004 JP 2004276653; 29.09.2004 JP 2004283775; 29.09.2004 JP 2004283839; 29.09.2004 JP 2004283776
(71) Applicant: KABUSHIKI KAISHA TOYOTA JIDOSHOKKI, Kariya-shi, Aichi-ken (JP)
(72) Inventor: Takeda, Mitsumasa, Kariya-shi Aichi-ken (JP)
(74) Representative: TBK-Patent

(57) **Abstract**

The safety of a load carrying device has been enhanced by providing interactive mechanisms to ascertain the operations in predetermined manner. The enhanced safety mechanisms interactively force the operator to ascertain safety while an object such as a battery is loaded onto or unloaded from a predetermined structure such an industrial vehicle. The carrying device is engaged with the industrial vehicle during the loading or unloading task. In addition, the object is locked during the transportation. These safety features are mechanically ascertained.

## Description

### BACKGROUND OF THE INVENTION

The present invention generally relates to a safety enhanced load carrier device and more particular relates to some enhanced safety features of the battery carrier device for transporting batteries to and from a vehicle including an industrial vehicle, an electric vehicle and a hybrid automobile.

In the prior art technologies of small load carriers, safety features have been of some concern. In one approach in assuring safety during the transport, a load such as a battery is secured to a carrying device as disclosed in Japanese Patent Publication Hei 6-329240. For example, referring to FIGURE 1, a carrier 1 is a hand-push device that includes a set of eight surface rollers 3 for facilitating the movement of a load in and out of the load carrying surface 4. After the load such as a battery is rolled onto the load carrying surface 4, a handle 8a is rotated in a clockwise direction to place a load block plate 6 above the load carrying surface 4. The load block plate 6 prevents the forward movement of the load beyond the load block plate 6 while the user pushes the carrier 1 on four casters 2 by a handle 19 to a destination.

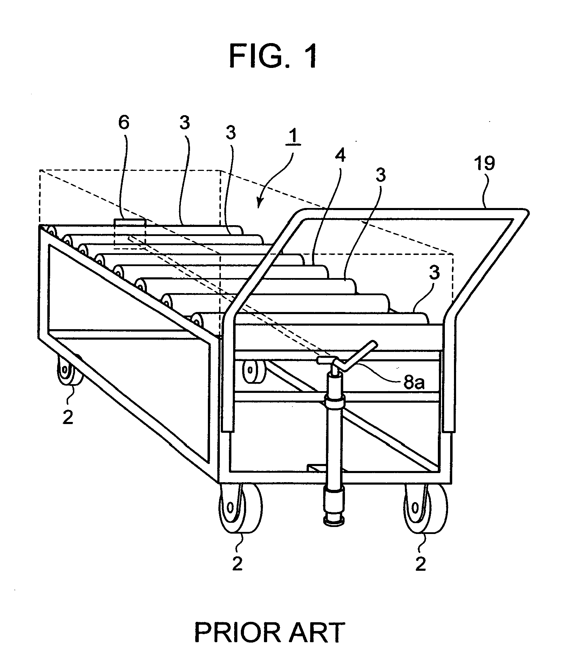

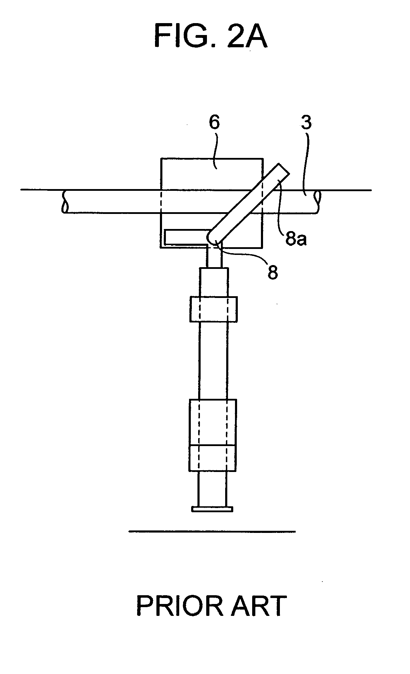

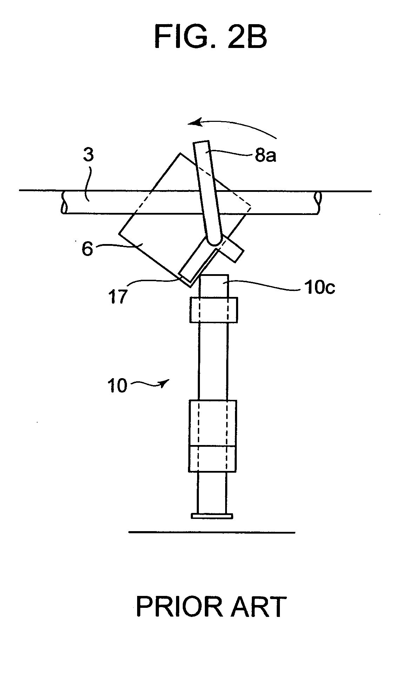

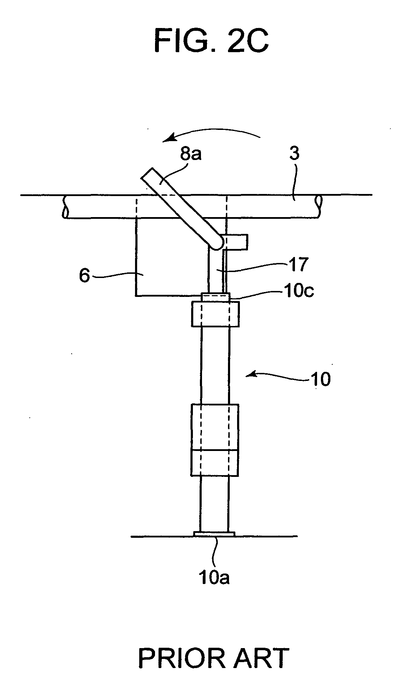

In further details, FIGURES 2A, 2B and 2C illustrate the safety mechanism that is linked to a ground stopper of the carrier 1. FIGURE 2A shows a relevant portion of one safety feature mechanism of the above prior art hand carrying device 1 of FIGURE 1. The load block plate 6 extends above the surface rollers 3, and the load block plate 6 is mechanically connected to the handle 8a at the other end of the carrier 1.

As shown in FIGURE 2B, when the handle 8a is rotated in the counter clockwise direction as shown in an arrow to place the load block plate 6 below the surface rollers 3 to remove the restricted movement of the load, the handle 8a cannot be turned all the way since a handle extended portion 17 hits a top portion 10c of a carrier stopper or stabilizer 10. In order to place the load block plate 6 below the surface rollers 3, the carrier 1 has to be initially secured or parked by the stopper 10.

As shown in FIGURE 2C, when the stopper 10 is placed in the park position, the stopper 10 is moved downwardly so that a bottom portion 10a makes a contact with the ground. Consequently, the top portion 10 is also downwardly moved by the same distance. This downward movement of the top portion 10c now allows the handle extended portion 17 to further rotate in the counter clock direction as shown by an arrow. When the handle 8a is rotated all the way to the left after the stopper 10 is grounded, the load block plate 6 is placed below the surface rollers 3 and the load is allowed to move forward beyond the load block plate 6. As discussed above, the load is secured by the load block plate 6 during its transport, and the load block plate 6 is removed from its effective position only when the carrier is grounded. Unfortunately, the stopper 10 is freely activated or deactivated regardless of the relative location of the carrier 1 with respect to a predetermined desired destination or structure.

In another approach in assuring safety during the transport, a load such as a battery is secured to a carrying device as disclosed in Japanese Patent Publication 2003-212125. For example, referring to FIGURE 3, a carrier 20 is a hand-push device that includes a load carrying unit 22 with a set of casters 22a and a load transporting unit 24 with a set of casters 24a. After the load such as a battery is placed on the load carrying unit 22, the load carrying unit 22 itself is placed on the loading surface of the load transporting unit 24. A pin 95 secures the load carrying unit 22 onto the load transporting unit 24 as the pin 95 is inserted into a position as indicated by the solid lines. As the operator pushes the carrier 20 by the handle 44 towards a desired destination such as a vehicle M, hooks 63 engages with the corresponding receiving structure in the vehicle M and completes the engagement as shown by the dotted line. The hooks 63 are mechanically linked to a hook control lever 80, which moves between a predetermined hook engagement position 80B and the hook releasing position 80A.

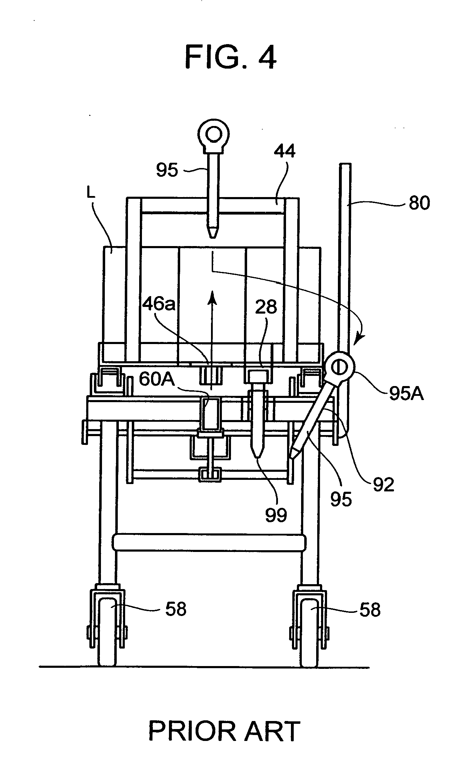

In further details of the second prior art approach, FIGURES 4 illustrates the safety mechanism that is associated with the control of the engagement hooks 63 of the carrier 20. A pin 95 secures the load carrying unit 22 onto the load transporting unit 24 during the transportation. Upon reaching the desired destination, the operator removes the pin 95 that has been held in a hole 46A and a semicircutar hole 60Aand places it in a second hole 92, which is located directly behind the hook control lever 80. As the pin 95 is moved from the first hole 46A to the second hole 92 by the operator, the load carrying unit 22 is still secured to the load transporting unit 24 by a temporary locking mechanism 99 and 28. To release the load carrying unit 22 from the load transporting unit 24, the temporary lock 99 must be manually released by the operator.

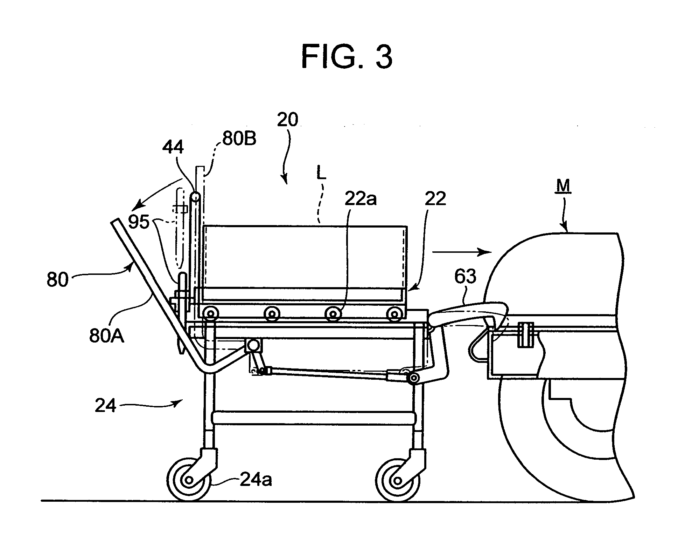

During the movement of the load carrying unit 22 onto the vehicle M, if the pin 95 has been correctly inserted in the hole 92, the engagement of the hooks 63 is secured by the pin 95 since the pin 95 blocks the backward movement of the hook control lever 80 to the hook releasing position 80A of FIGURE 3. However, as described above, the engagement hooks 63 are kept secured to the vehicle M by the manually inserted pin 95 in the hole 92 which is an independent act from the act of removing the pin 95 from the hole 60A. In other words, one act does not guarantee to achieve the other act. Consequently, there is a margin of error in the safety mechanism for securing the hook engagement during the load delivery. Obviously, the margin of error depends upon the human operation to complete the above two independent acts. Furthermore, the operator also must manually releases the load carrying unit 22 from the load transporting unit 24 by the temporary lock 99 to further complicate the operation.

As considered above in the two prior art approaches, the safety mechanism for the load carrying device remains to be desired. In general, the operator must perform independent acts, and these acts typically include securing the carrying device at a predetermined structure, unlocking the load, delivering the load to the desired structure or retrieving the load from the destination, locking the load and finally freeing the carrying device from the predetermined structure. Although these independent acts are important to maintain safety during the load transporting process, the operator often ignore or forget to perform each of these safety procedures. To realize effective safety features, the carrying device should be designed to eliminate the independent acts so that the operator is forced to follow predetermined safety procedures.

### SUMMARY OF THE INVENTION

In order to solve the above and other problems, according to a first aspect of the current invention, a safety device for carrying a load, including a load holding unit for holding a load, an engagement control located on the load holding unit for engaging the load holding unit with a predetermined structure in an engaged state and for disengaging the load holding unit from the predetermined structure in a disengaged state, and a load control located on the load holding unit for preventing the load from moving on the load holding unit in a load lock state, the load control freeing the load on the load holding unit in a load unlock state, the engagement control in the engaged state allowing the load control to transition into the load unlock state from the load lock state, the engagement control in the disengaged state prohibiting the load control from transitioning into the load unlock state from the load lock state.

According to the second aspect of the current invention, a safety device for carrying a load, including a load holding unit for holding a load, an engagement control located on the load holding unit for engaging the load holding unit with a predetermined structure in an engaged state and for disengaging the load holding unit from the predetermined structure in a disengaged state, and a load control located on the load holding unit for preventing the load from moving on the load holding unit in a load lock state, the load control freeing the load on the load holding unit in a load unlock state, the load control in the load lock state allowing the engagement control to transition into the disengaged state from the engaged state, the load control in the load unlock state prohibiting the engagement control from transitioning into the disengaged state from the engaged state.

According to the third aspect of the current invention, a method of operating a safety device for carrying a load, including the steps of a) engaging a load carrying unit with a predetermined structure so that a engagement control to be in an engaged state, b) placing a load control in a load unlock state while the engagement control is in the engaged state, c) performing a predetermined task with respect to the load, d) preventing the engagement control from transitioning to the disengaged state from the engaged state during the steps b) and c), e) placing the load control in a load lock state upon completing the step c) while the engagement control is still in the engaged state, and f) disengaging the load carrying unit from the predetermined structure so that the engagement control is in a disengaged state only after the step e).

According to the fourth aspect of the current invention, a method of operating a safety device for carrying a load to a predetermined structure, including the steps of a) engaging a load carrying unit with the predetermined structure so that a engagement control to be in an engaged state, b) placing a load control in a load unlock state while the engagement control is in the engaged state, c) performing a predetermined task with respect to the load, d) placing the load control in a load lock state upon completing the step c) while the engagement control is still in the engaged state, e) disengaging the load carrying unit from the predetermined structure so that the engagement control is in a disengaged state only after the step d), f) transporting the load carrying unit to a predetermined destination from the predetermined structure while the load control in the load lock sate, and g) preventing the load control from transitioning to the load unlock state from the load lock state after the step e) and during the step f).

According to the fifth aspect of the current invention, a safety load carrying device for carrying a load to be used with an existing load transferring device, including: a retrofitting load carrying unit for holding the load and having a retrofitting portion for retrofitting the existing load transferring device; an engagement control unit located on the retrofitting load carrying unit for engaging the retrofitting load carrying unit with the predetermined structure in an engaged state and for disengaging the retrofitting load carrying unit from the predetermined structure in a disengaged state; and a load control located on the retrofitting load carrying unit for locking the load on the retrofitting load carrying unit in a load lock state, the load control unlocking the load on the retrofitting load carrying unit in a load unlock state, the engagement control in the engaged state allowing the load control to transition into the load unlock state from the load lock state, the engagement control in the disengaged state prohibiting the load control from transitioning into the load unlock state from the load lock state.

According to the sixth aspect of the current invention, a safety load carrying device for carrying a load to be used with an existing load transferring device, including: a retrofitting load carrying unit for holding the load and having a retrofitting portion for retrofitting the existing load transferring device; an engagement control unit located on the retrofitting load carrying unit for engaging the retrofitting load carrying unit with the predetermined structure in an engaged state and for disengaging the retrofitting load carrying unit from the predetermined structure in a disengaged state; and a load control located on the retrofitting load carrying unit for locking the load on the retrofitting load carrying unit in a load lock state, the load control unlocking the load on the retrofitting load carrying unit in a load unlock state, the load control in the load lock state allowing the engagement control to transition into the disengaged state from the engaged state, the load control in the load unlock state prohibiting the engagement control from transitioning into the disengaged state from the engaged state.

These and various other advantages and features of novelty which characterize the invention are pointed out with particularity in the claims annexed hereto and forming a part hereof. However, for a better understanding of the invention, its advantages, and the objects obtained by its use, reference should be made to the drawings which form a further part hereof, and to the accompanying descriptive matter, in which there is illustrated and described a preferred embodiment of the invention.

### BRIEF DESCRIPTION OF THE DRAWINGS

FIGURE 1 is a prior art hand-push carrier device that includes a set of eight surface rollers for facilitating the movement of a load in and out of the load carrying surface .
FIGURES 2A, 2B and 2C illustrate the safety mechanism of the prior art device of FIGURE 1 that is linked to a ground stopper of the carrier.
FIGURE 3 is a prior art hand-push carrier device that includes a load carrying unit with a set of casters and a load transporting unit with a set of casters.
FIGURES 4 illustrates the safety mechanism of the prior art device of FIGURE 3 that is associated the control of the engagement hooks of the carrier.
FIGURE 5 is a prospective view illustrating a first preferred embodiment of the safety enhanced load carrying device according to the current invention.
FIGURE 6 is a side view illustrating the relative heights between the load transporting unit and the load carrying unit in one preferred embodiment according to the current invention.
FIGURE 7 is a prospective view illustrating one preferred embodiment of the load transporting unit and the load carrying unit that are joined together according to the current invention.
FIGURE 8 is a cross sectional view illustrating an engagement securing mechanism for safely maintaining the relative location of the load transporting unit and the load carrying unit in one preferred embodiment according to the current invention.
FIGURES 9A and 9B are perspective views illustrating the detailed mechanism for securing the load transporting unit and the load carrying unit of the first preferred embodiment according to the current invention.
FIGURE 10 is a prospective view illustrating one exemplary application of the first preferred embodiment according to the current invention.
FIGURE 11 is a prospective view isolating some mechanical components of the hook engagement system in the first preferred embodiment according to the current invention.
FIGURE 12 is a partial cross sectional view isolating other mechanical components of the hook engagement system in the first preferred embodiment according to the current invention.
FIGURE 13 is a prospective view isolating other mechanical components of the hook engagement system in the first preferred embodiment according to the current invention.
FIGURE 14 is a side view illustrating the positional relationship among the certain isolated components of the safety mechanisms in the first preferred embodiment according to the current invention.
FIGURE 15 is a prospective view isolating the components of the previously described safety mechanisms for the load lock control and the hook engagement control in the first preferred embodiment according to the current invention.
FIGURE 16 is a side view illustrating the interactive safety features between the load control and the engagement control in the first preferred embodiment according to the current invention.
FIGURE 17 is a side view illustrating other interactive safety features between the load control and the engagement control in the first preferred embodiment according to the current invention.
FIGURE 18 is a side view illustrating yet another interactive safety features between the load control and the engagement control in the first preferred embodiment according to the current invention.
FIGURES 19A and 19B are flow charts illustrating steps involved in a preferred process of operating the safety enhanced load carrying device according to the current invention.
FIGURE 20 is a prospective view illustrating a second preferred embodiment of the safety enhanced load carrying device according to the current invention.

### DETAILED DESCRIPTION OF THE PREFERRED EMBODIMENTS

Based upon incorporation by external reference, the current application incorporates all disclosures in the corresponding foreign priority applications (Japanese Applications 2004-2766653, 2004-283775, 2004-283776 and 2004-283839) from which the current application claims priority.

In the following detailed description of the preferred embodiments, the word, "automobile" or "vehicle" is interchangeably used to include various types including conventional, electric and hybrid powered transportation devices for both industrial and non-industrial uses.

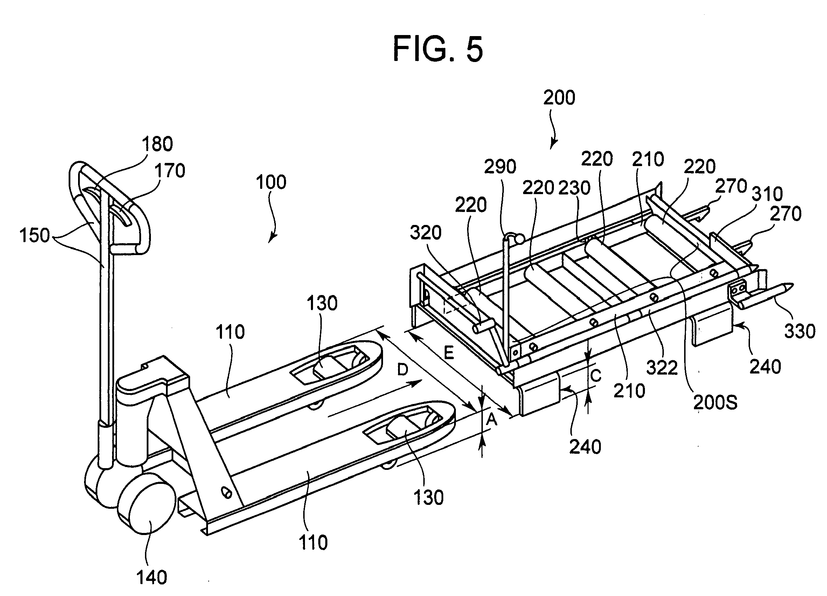

Referring now to the drawings, wherein like reference numerals designate corresponding structures throughout the views, and referring in particular to FIGURE 5, a prospective view illustrates a first preferred embodiment of the safety enhanced load carrying device according to the current invention. The first preferred embodiment of the safe load carrying device includes a load carrying unit 200 that carries a load such as a battery for an automobile and a load transporting unit 100 that carries the load carrying unit 200. These units 100 and 200 are detachably connected as will be later discussed in detail, but they are independent and separate units. For example, multiple types of the load carrying units 200 are implemented for various load specifications but may be transported by a single type of the load transporting unit 100 in certain applications. In this regard, it is also possible that a certain preferred embodiment of the load carrying unit 200 is retrofitted on an existing one of the load transporting units 100.

Still referring to FIGURE 5, the load carrying unit 200 further includes the following major components to safely transport the load. In general, the load carrying unit 200 has a load carrying or holding surface 200S, load supporting legs 240, engagement control units 290, 270 and load control units 310, 320, 322. The load is placed on the load holding surface 200S that is partially defined by a set of four rollers 220 to facilitate the movement of the load in and out of the load carrying surface 200S. The rollers 220 are supported by a pair of opposing side walls 210. The load holding surface 200S and the associated structures are supported by a set of four legs 240, which extend under the load holding surface 200S to provide a ground clearance space. The ground clearance space has a predetermined carrier width E and a predetermined carrier height C as each shown by a corresponding double-headed arrow. Lastly, the load carrying unit 200 further includes a guiding pin 330 that is located at a front end to guide a relative position of the load carrying unit 200 with respect to a predetermined structure at the destination.

FIGURE 5 additionally illustrate some components for the safety features. In general, the engagement control is in either an engaged state or a disengaged state. The engagement control includes a movable control lever 290 that is mechanically connected to a pair of hooks 270. The movable control lever 290 controls the hooks 270 to be placed at a predetermined engaged position or a predetermined disengaged position. The hooks 270 are designed to engage with a predetermined structure at the predetermined engaged position while the engagement control is in the engaged state as will be later described. Similarly, in general, the load control is in either a load lock state or a load unlock state. The load control includes a load control rotatable handle 320 that is mechanically connected to a load block plate 310 via a link rod 322. The rotatable handle 320 controls the load block plate 310 to be placed at a predetermined load lock position or a predetermined load unlock position. The load block plate 310 is designed to block the movement of the load on the load carrying surface 200S at the predetermined load lock position while the load control is in the load lock state as will be later described.

The other half of the first preferred embodiment is the load transporting unit 100 as illustrated in the left side of FIGURE 5. In general, the load transporting unit 100 is a hand track or a hand pallet tack that is commercially available or custom-manufactured according to a predetermined engineering specification. Exemplary commercial units are MiniMover BT-HB Series models or Hand Pallet BT-HP23 both from Toyota L&F, Japan. The load transporting unit 100 further includes a fork area or load carrying area 110 and a set of wheels 130 and 140. The fork or load carrying area 110 includes to a fork insertion part in this embodiment. A pair of wheels 140 is located at one end of the load transporting unit 100 to steer the directions by a pulling handle 150. Another pair of the rollers 130 is located apart by a certain distance near the other end of the load transporting unit 100 to balance the load carrying unit 200. As the handle 150 is pumped vertically, the fork areas 110 are lifted from the ground. The handle 150 is also equipped with a break 180 for parking the load transporting unit 100 and a lift shifter 170 for reducing the lifted height of the fork areas 110 towards a predetermined fork default height A.

Still referring to FIGURE 5, the load carrying unit 200 is designed to be placed on the load transporting unit 100. The fork areas 110 are inserted into the ground clearance space of the load carrying unit 200 as indicated by an arrow. The ground clearance space is designed to accommodate the load transporting unit 100 so that the fork areas 110 are placed underneath the load carrying unit 200 before the fork areas 110 are lifted to support the load carrying unit 200. In other words, a fork width D is narrower than the predetermined carrier width E of the load carrying unit 200. In addition, at the insertion time, the fork areas 110 are placed at the fork predetermined default height A that is lower than the predetermined carrier height C. The above described structures substantially facilitate the operator to interchange the load carrying units 200 that are placed on the ground with a single set of the load transporting unit 100.

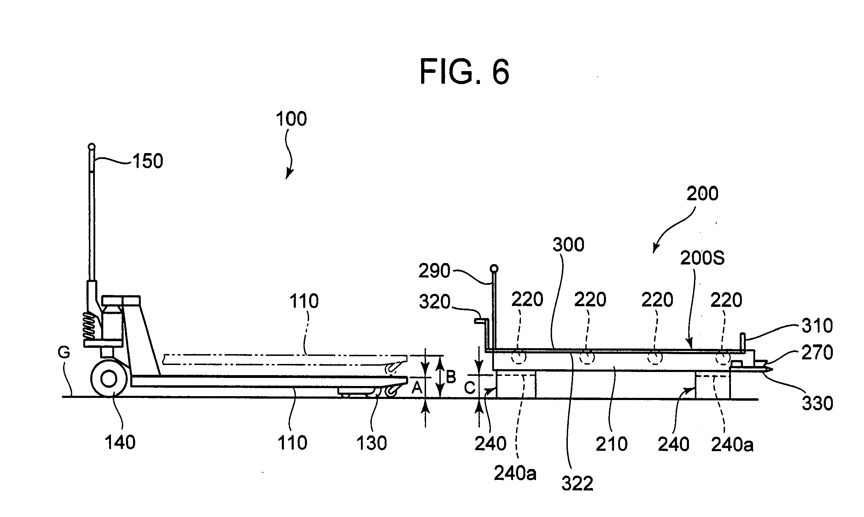

Now referring to FIGURE 6, a side view illustrates the relative height of the load transporting unit 100 and the load carrying unit 200 in one preferred embodiment according to the current invention. The load carrying unit 200 has the load holding area 200S that is substantially the same height as the top of the rollers 220. The rollers 220 are supported by the side plates 210. The safety features of the load carrying unit 200 further includes the engagement control with the hooks 270 and the movable control lever 290 as well as the load control with the rotatable handle 320, the link rod 322 and the load block plate 310. The load holding surface 200S is elevated by the supporting legs 240 to have the ground clearance space, and a distance from the ground G to a top portion 240a is indicated by a height C. The ground clearance height C is fixed.

On the other hand, the height of the fork areas 110 is adjustable in the load transporting unit 100. The adjustable ranges from the lowest predetermined fork default height A as indicated by the solid lines to an elevated height B as indicated by the dotted lines. As already described with respect to FIGURE 5, the height of the fork areas 110 from the ground G is adjusted by pumping the handle 150 in the vertical direction. It is designed that the highest elevated height B exceeds the ground clearance height C. In order to insert the fork areas 110 in the ground clearance space of the load carrying unit 200, the height of the fork areas 110 is adjusted below the ground clearance height C. Then, after the insertion, the height of the fork areas 110 has to be adjusted above the ground clearance height C to lift the load carrying unit 200 off the ground G in order to transport the load carrying unit 200 to a desired destination.

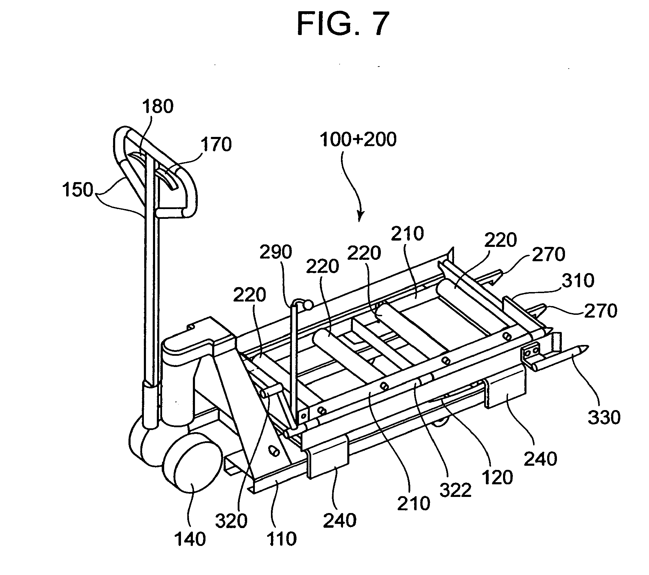

Now referring to FIGURE 7, a prospective view illustrates one preferred embodiment of the load transporting unit 100 and the load carrying unit 200 that are joined together according to the current invention. Generally, the load carrying unit 200 is supported by the load transporting unit 100 by placing the load carrying unit 200 on top of the fork areas 110 of the load transporting unit 100. The front side of the load carrying unit 200 having the hooks 270 and the guide pin 330 is placed on a far side of the fork areas 110 away from the handle 150 of the load transporting unit 100. This is because the far side is placed closer to a predetermined structure so that the guide pin 330 will guide the load carrying unit 200 to a predetermined structure. For example, the guide pin 330 will guide to a desired position by being inserted into a complementary hole on the predetermined structure. As the load carrying unit 200 arrives at the predetermined structure, the hooks 270 engage with a certain portion of the predetermined structure.

The other side of the load carrying unit 200 having the movable control lever 290 and the load control rotatable handle 320 is placed on a near side of the fork areas 110 of the load transporting unit 100. This side is a control side which should be easily accessible to the operator, and the operator controls the moving direction of the load transporting unit 100 and the load carrying unit 200 by steering the handle 150 towards the desired structure. During the transport, the movement of a load is limited by the load block plate 310 that is placed at the front end of the load holding surface. Upon arriving at the desired structure, the operator controls the safety features such as the hook engagement by the movable control lever 290 and the load locking by the rotatable handle 320. Then, the operator moves the load towards the predetermined structure for delivery or towards the load carrying unit 200 for retrieval. Since the operator is standing away from the moving load and has easy access to all of the controls, the safety is promoted.

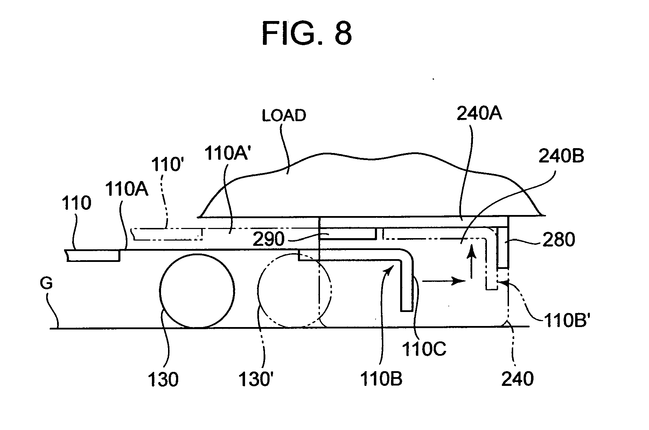

Still referring to FIGURE 7, during the transport of the load carrying unit 200, there are other safety features in one preferred embodiment of the load transporting unit 100 and the load carrying unit 200 that are joined together according to the current invention. For example, the load carrying unit 200 is restricted from its lateral movement by the supporting legs 240, whose inner side surfaces contact the corresponding side walls of the fork areas 110. In addition, the load transporting unit 100 and the load carrying unit 200 are further securely joined together by certain additional mechanisms that will be explained with respect to FIGURE 8.

Now referring to FIGURE 8, a cross sectional view illustrates an engagement securing mechanism for safely maintaining the relative location of the load transporting unit 100 and the load carrying unit 200 in one preferred embodiment according to the current invention. One of the supporting legs 240 is located at the front end of the load carrying unit 200. The supporting leg 240 has a top wall 240A and a side wall 240B. On an inner surface of the top wall 240A, a top fitting area 290 protrudes towards the ground surface G. In addition, the top wall 240A and the side wall 240B share a front fitting area 280 on their inner surfaces. The fork area 110 of the load transporting unit 100 has an opening 110A near the wheel 130. The front of the wheel 130 is a fork front portion 110B as shown in the right side of the wheel 130 in the drawing. The distance between the front end of the top fitting area 290 and the front fitting area 280 corresponds to the length of the fork front portion 110B of the fork area 110.

Still referring to FIGURE 8, the engagement is secured among the fork front portion 110B, the top fitting area 290 and the front fitting area 280 in the first preferred embodiment according to the current invention. As the front fork portion 110B is inserted into the supporting leg 240 as indicated by a horizontal arrow and is also lifted to a position 110' as indicated by a vertical arrow, the fork front portion 110B reaches an secured position 110B' as indicated by the dotted line. The wheel 130 remains on the ground G at the same height after the lift. At the elevated position, the top fitting area 290 is placed in the opening 110A' of the position 110'. In the above described joined position, the fork front portion 100B' is secured by the front fitting area 280 to prevent the forward movement of the fork area 110 and also by the top fitting area 290 to prevent the backward movement of the fork area 110. The fork areas 110 are further lifted beyond the elevated position 110' in the dotted lines so that the supporting leg 240 is off the ground G for transporting the load carrying unit 200. As described above, the fork areas 110 of the load transporting unit 100 and the supporting leg 240 of the load carrying unit 200 are securely joined during the transportation of the load.

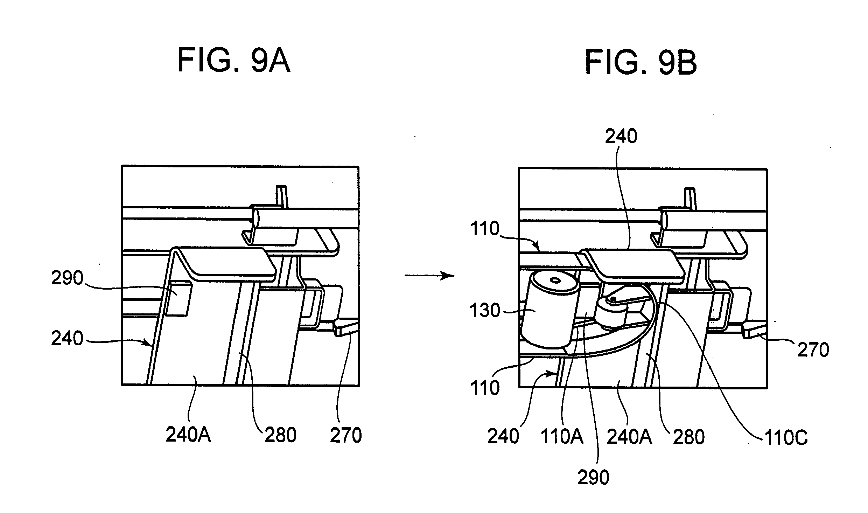

FIGURES 9A and 9B illustrate a perspective view of the detailed mechanism for securing the load transporting unit 100 and the load carrying unit 200 of the first preferred embodiment according to the current invention. In particular, FIGURE 9A illustrates the relevant components that are viewed from the bottom of the load carrying unit 200 before the secure engagement between the load transporting unit 100 and the load carrying unit 200. The top fitting area 290 is located near a proximal edge on the inner surface of the top wall 240A of the supporting leg 240, and the proximal edge is closer to the rear of the load carrying unit 200 where the handle 150 is located. Although the top fitting area 290 is a rectangle that has a predetermined thickness in the first preferred embodiment, the shape and the thickness are not limited as long as the top fitting area 290 is mutually fitting to secure the load transporting unit 100. The front fitting area 280 is located near a distal edge on the inner surface of the top wall 240A, and the distal edge is closer to the front of the load carrying unit 200 where the hooks 270 are located. Although the front fitting area 280 is a rectangle that is perpendicular to the top wall 240A in the first preferred embodiment, the shape and the orientation are not limited as long as the front fitting area 280 secures the load transporting unit 100.

FIGURE 9B illustrates the above relevant components that are viewed from the bottom of the load transporting unit 100 and the load carrying unit 200 after the secure engagement is made between the load transporting unit 100 and the load carrying unit 200. After the front fork portion 110B is inserted into the supporting leg 240, the load transporting unit 100 is advanced towards the front end of the load carrying unit 200 until the load transporting unit 100 no longer can move forward. That is, a front end 10 of the fork area 110 makes a contact with the front fitting area 280. Then, the load transporting unit 100 is lifted so that the area 110 is vertically moved to a predetermined secured position as described with respect to FIGURE 8. The top fitting area 290 is now placed in the opening 110A of the fork area 110 and detachably secures the relative position between the load transporting unit 100 and the load carrying unit 200. Similarly, the front end 110C now butts against the front fitting area 280. Thus, the top fitting area 290 and the front fitting area 280 secure the relative position of the load transporting unit 100 and the load carrying unit 200 in a detachable manner.

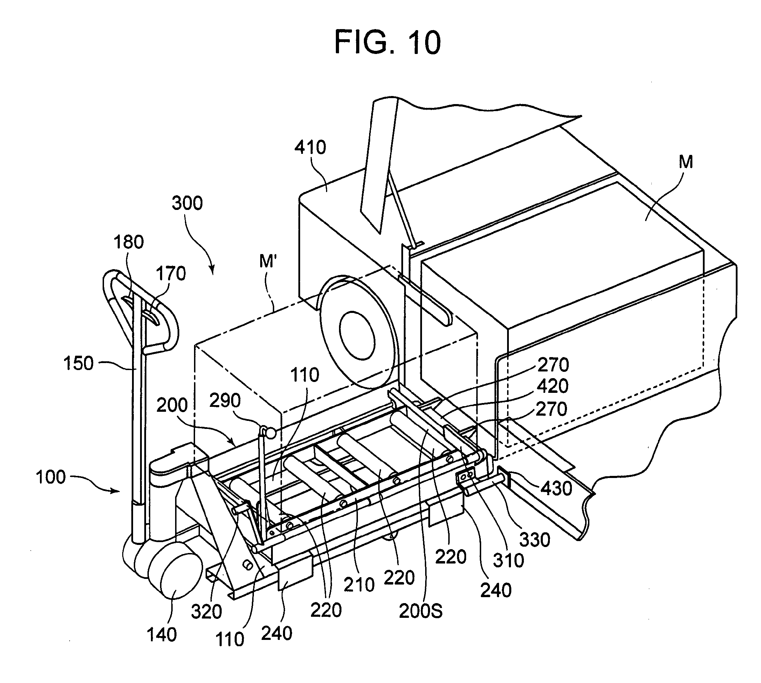

Now referring to FIGURE 10, a prospective view illustrates one exemplary application of the first preferred embodiment according to the current invention. As described above with respect to FIGURES 5 through 10, a predetermined load M such as a battery can be delivered to or retrieved from a desired destination such as a vehicle 410. The vehicle 410 includes various types of vehicles as defined above. In a particular example as illustrated in FIGURE 10, the battery pack M is currently situated inside a forklift 410 as indicated in the solid lines. The battery pack M is to be retrieved from the forklift 410 onto the load carrying unit 200 at a position M' as indicated by the dotted lines. It is needless to say that the delivering process is substantially reversed from retrieving the battery pack from the position M inside the vehicle 410 to at the position M'.

Still referring to FIGURE 10, to further illustrate the retrieval process, the load transporting unit 100 and the load carrying unit 200 are operated in the following manner. An empty one of the load carrying units 200 is securely jointed onto the load transporting unit 100 as described with respect to FIGURES 8 and 9. After securely joining the empty load carrying units 200 on the load transporting unit 100, the operator moves a joined structure 300 towards the forklift 410. As the joined structure approaches the forklift 410, the guide pin 330 is aimed at the corresponding receiving structure 430 on the forklift 410. During the aiming process, the operator positions the joined structure 300 by steering the wheel 140 and adjusts the height of the joined structure 300 by the handle 150. As previously described, the height from the ground increases by vertically pumping the handle 150 while the height decrease by releasing its height sustaining mechanism via the lever 170. The complementary engagement between the guide pin 330 and the receiving structure 430 automatically assures the joined structure 300 to be positioned at a predetermined battery exchange location of the forklift 410. As the joined structure 300 approaches the predetermined battery exchange height and location according to the guide pin 330, the hooks 270 of the load carrying units 200 also initiate and complete the engagement with a hook engagement unit 420 of the forklift 410. The appropriate engagement between the hooks 270 and the hook engagement unit 420 is completed when the joined structure 300 arrives at the predetermined battery exchange height and location which is immediately adjacent to the side of the forklift 410 as illustrated in FIGURE 10. At the predetermined battery exchange position, the operator applies the parking break via the break lever 180 in order to secure the safe battery exchange position.

At the safe battery exchange position, the operator controls additional safety mechanisms of the first preferred embodiment in order to ascertain an accident-free battery retrieval operation according to the current invention. Initially, the load control rotatable handle 320 is rotated in the clockwise direction so that the load block plate 310 is placed out of the load holding surface 200S, and then the battery pack M' is retrieved from the forklift 410 onto the load holding surface 200S at a retrieving position M' as indicated by the dotted lines. Upon confirming the appropriate retrieving position M', the operator secures the battery pack M' on the load carrying units 200 by rotating the rotatable handle 320 in the counterclockwise direction so that the load block plate 310 is placed at the front end of the load holding surface 200S for blocking the forward movement of the battery pack M'. After the operator confirms the secured battery pack M', he or she now disengages the hooks 270 from the hook engagement unit 420 of the forklift 410 before moving the joined structure 300 to a desired destination. The hook disengagement is accomplished by pulling the movable lever towards the handle 150. The above described safety feature mechanisms will be further illustrated in detail in the following description of the preferred embodiment.

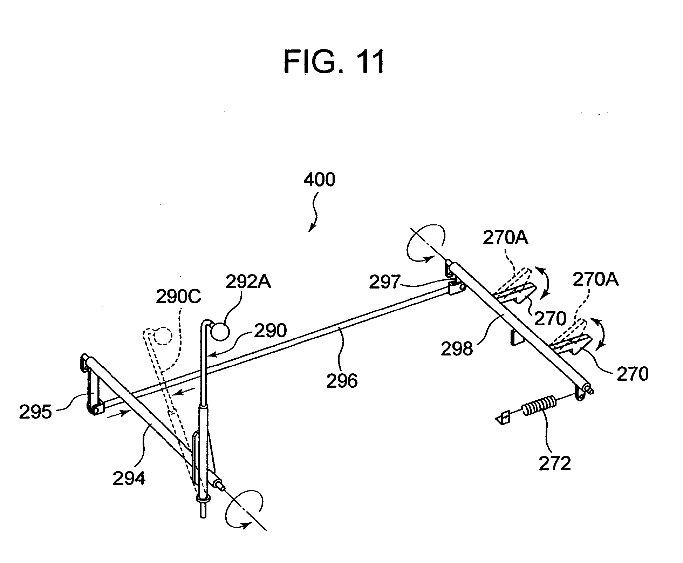

Now referring to FIGURE 11, a prospective view isolates some mechanical components of the hook engagement system or the engagement control in the first preferred embodiment according to the current invention. As described above with respect to FIGURE 10, the hooks 270 are positioned either at a predetermined engaged position or a predetermined disengaged position via the movable control lever 290. The movable control lever 290 is at a control engaged position 292A as illustrated by the solid lines when an engagement control 400 is in the engaged state. That is, when the movable control lever 290 of the engagement control 400 is in the engaged state, the hooks 270 are positioned at the predetermined engaged position as shown in the solid lines. In general, the hooks 270 are positioned in the engaged position by the urging caused by the spring 272.

Still referring to FIGURE 11, on the other hand, when the operator pulls the movable control lever 290 as indicated by an arrow to a position 290C, the movable control lever 290 is at a control disengaged position as illustrated by the dotted lines as the engagement control 400 transitions into the disengaged state. Due to the pulling action, the movable control lever 290 causes a first linkage rod 294 to rotate in the counterclockwise direction as indicated by an arrow. The rotation of the first linkage rod 294 pushes a first linkage arm 295 and a second linkage rod 296 to a forward direction as indicated by an arrow. Lastly, the forward movement of the second linkage rod 296 causes a second linkage arm 297 and a third linkage rod 298 to rotate in the counter clockwise direction as indicated by an arrow against the urging of the spring 272. Consequently, when the movable control lever 290 of the engagement control 400 is in a disengaged state, the hooks 270 are positioned into the predetermined disengaged position 270A as shown in the dotted lines and the corresponding arrows.

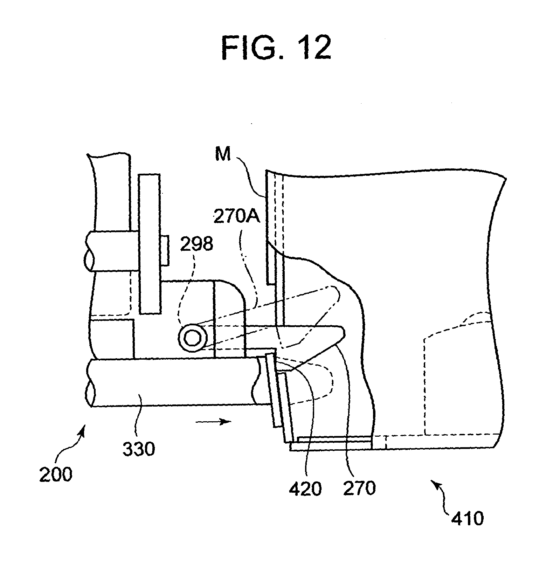

Now referring to FIGURE 12, a partial cross sectional view isolates other mechanical components of the hook engagement control system in the first preferred embodiment according to the current invention. As described above with respect to FIGURE 11, the hooks 270 are positioned either at the engaged position as shown by solid lines or the disengaged position 270A as shown in the dotted lines. In general, the hooks 270 are positioned in the engaged state by the urging caused by the spring 272 as described with respect to FIGURE 11. The operator maneuvers the load carrying unit 200 towards the predetermined target position via the engagement of the guide pin 330 with the corresponding receiving structure as indicated by an arrow. At the same time, as the hooks 270 approach the predetermined structure 410, the hooks 270 remain in the predetermined engaged position. Upon contacting the hook engagement unit 420, the further forward movement of the load carrying unit 200 by the operator causes the hooks 270 to push upward by their sloped portion against the urging and the weight of the hooks 270 and rotate around the third linkage rod 298. Subsequently, a vertical portion of the hooks 270 engages with the corresponding wall of hook engagement unit 420 to complete the correct positioning of the load carrying unit 200 in a secured manner.

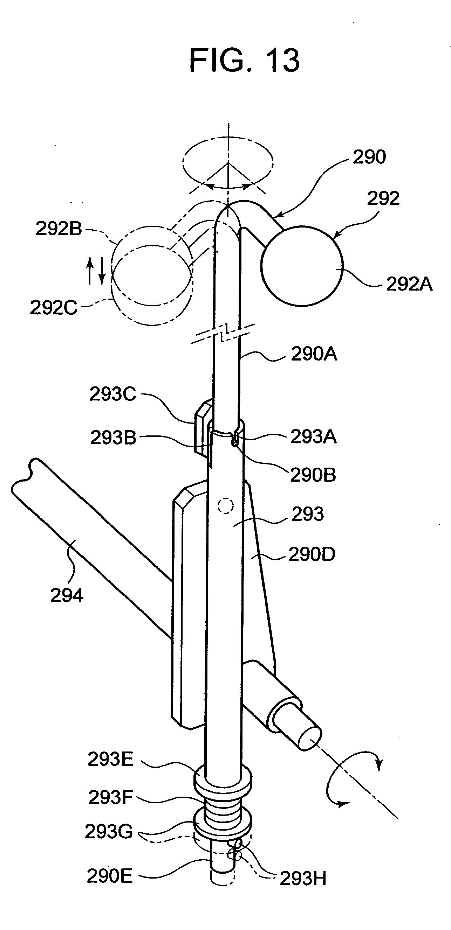

Now referring to FIGURE 13, a prospective view isolates other mechanical components of the hook engagement system in the first preferred embodiment according to the current invention. In particular, the prospective view illustrates the components associated with the movable control lever 290 for locking the disengaged state of the engagement control. The movable control lever 290 and the first linkage rod 294 are fixedly connected by a linkage connecting plate or a rotation preventing plate 290D. As described above with respect to FIGURE 11, the movable control lever 290 is pulled forward or backward to cause the rotation of the first linkage rod 294 via the linkage connecting plate 290D as indicated by a double-headed arrow. The rotation of the first linkage rod 294 ultimately places the hooks to be at a desired position. In dependent of the above described movement for positioning the hooks, the movable control lever 290 also provides additional safety features during the operation.

Still referring to FIGURE 13, the movable control lever 290 further includes additional components for controlling the movements of the movable control lever 290. A receiving portion 293 receives a vertical portion 290A in its inner space at a proximal end. A distal end 290E of the vertical portion 290A extends beyond a distal end of the receiving portion 293. The vertical portion 290A is movable inside the receiving portion 290B of the movable control lever 290. The vertical portion 290A further includes a position pin 290B that is fixed on the vertical portion 290A and protrudes from the surface of the vertical portion 290A. The receiving portion 293 also further includes a short groove 293A and a long groove 293B for accepting the position pin 290B. Both the short groove 293A and the long groove 293B start on the edge of the proximal end of the receiving portion 293, but the long groove 293B further extends downwardly beyond the short groove 293A. At a position 292A as indicated by the solid lines, the rotatable knob 292 is positioned so that the position pin 290B is accepted by the short groove 293A. At a position 292B as indicated by the dotted lines, the rotatable knob 292 is positioned so that the position pin 290B is accepted by the long groove 293B. The position pin 290B is prevented from rotating further beyond a certain point by a pin blocking plate 293C. Thus, a rotatable knob 292 of the movable control lever 290 is rotatable for approximately 90 degrees along the surface that is perpendicular to a vertical portion 290A of the movable control lever 290 as indicated by a double-headed arrow.

At the position pin 292B, the position pin 290B is accepted by the long groove 293B, and the movable control lever 290 moves further downwardly by the following mechanism. Near the distal end 290E, a stopper pin 293H is located on the vertical portion 290A. A spring 293F and a pair of washers 293E, 293G are placed on the vertical portion 290A between the stopper pin 293H and the distal end of the receiving portion 293. Since the spring 293F urges the washers 293E and 293G apart respectively towards the distal end of the receiving portion 293 and the stopper pin 293H, when the position pin 290B is accepted by the long groove 293B, the distal end 290E is urged to move towards an extended position as indicated by the dotted lines. Consequently, the rotatable knob 292 of the movable lever 290 automatically moves downwardly from the position 292B to the position 292C as indicated by a downward arrow when the position pin 290B is accepted by the long groove 293B.

On the other hand, when the rotatable knob 292 is moved from the position 292C to 292B by the operator against the urging caused by the spring 293F as indicated by the upward arrow, the distal end 290E of vertical portion 290A is pulled back from the above described extended position by the following mechanism. As the vertical portion 290A is pulled back, the stopper pin 293H pushes the lower washer 293G upwardly to compress the spring 293F. Subsequently, after the rotatable knob 292 is rotated in the counter clockwise direction from the position 292B to the position 292A, the position pin 290B is accepted by the short groove 293BA. Consequently, the distal end 290E is maintained at a retracted position as indicated by the solid lines and the spring 293F remains in the compressed state.

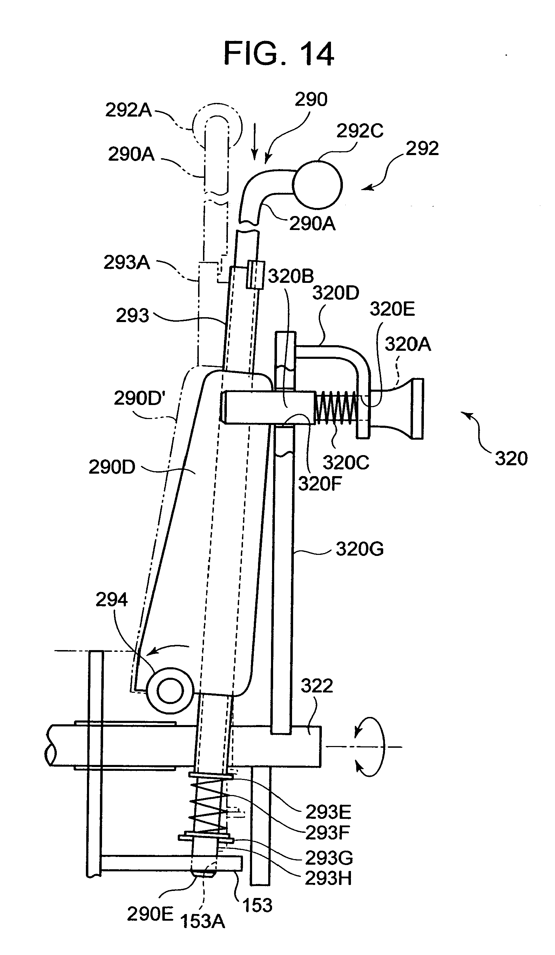

Now referring to FIGURE 14, a side view illustrates the positional relationship among the certain isolated components of the safety mechanisms in the first preferred embodiment according to the current invention. The isolated side view is seen from the side of the load carrying unit 200 as indicated by an arrow in FIGURE 7. As already described with respect to FIGURE 13, the rotatable knob 292 rotates between the two positions 292A and 292C, and the rotatable knob 292 also changes its vertical position between the two positions 292A and 292C. At the position 292C, the rotatable knob 292 is in the disengaged state for placing the hooks in the predetermined disengaged position. The rotatable knob 292 at the position 292C is lowered by the urging from the spring 293F as indicated by a downward arrow. The expanding spring 293F forces the washers 293E and 293G apart to push the stopper pin 293H on the vertical portion 290A in the downward direction. As a result, the distal end 290E of the vertical portion 290A engages with a bore 153A of a bottom plate 153. Thus, when the movable control lever 290 is in the disengaged state, the above engagement mechanism locks the rotatable knob 292 in this position 292C to maintain the hooks in the disengaged position. This locking mechanism provides a safety feature while the operator moves the load carrying unit 200 on the load transporting unit 100 away from the predetermined structure by maintaining the hooks 270 in the predetermined disengaged position.

On the other hand, at the position 292A, the rotatable knob 292 is in the engaged state as indicated by the dotted lines. As the rotatable knob 292 is rotated and pulled back towards the handle 150, the movable control lever 290 causes the counter clockwise rotation of the first linkage rod 294 via the linkage connecting plate 290D as indicated by an arrow. At the same time, at the position 292A, the rotatable knob 292 is elevated by the operator against the spring 293F. As a result, the distal end 290E of the vertical portion 290A disengages itself from the bore 153A of the bottom plate 153. Thus, when the movable control lever 290 is in the engaged state, the rotatable knob 292 in the position 292A maintains the hooks in the predetermined engaged position.

Still referring to FIGURE 14, the side view also illustrates the positional relationship of other safety mechanisms in the first preferred embodiment according to the current invention. In general, the load control rotatable handle 320 controls the load locking mechanism or unit as described with respect to FIGURES 5, 6, 7 and 10. The rotatable handle assembly 320 of the load control is located adjacent to the movable control lever 290 of the hook engagement control and mechanically interacts with the load control. The rotatable handle assembly 320 further includes a load control knob 320A that is attached to a spring 320C and a safety pin 320B. The rotatable handle assembly 320 is supported by a mounting bracket 320D through a bore 320E, and the mounting bracket 320D is attached to a load control rotatable arm 320G. The load control rotatable arm 320G and the rotatable handle assembly 320 are designed to rotate around the link rod 322 to control the load lock.

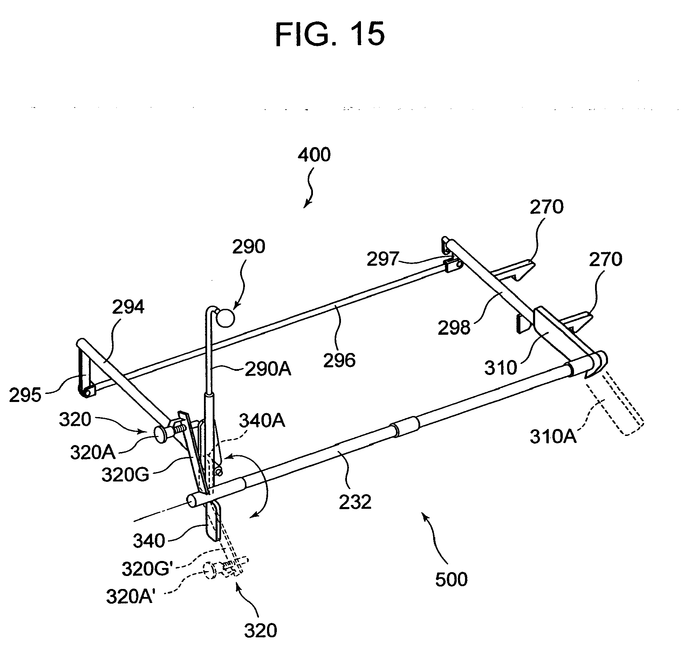

FIGURE 14 also illustrates that an additional safety feature is provided for the load lock mechanism in the preferred embodiment according to the current invention. The safety pin 320B extends through a bore 320F of the load control rotatable arm 320G and also beyond a proximal portion of the linkage connecting plate 290D as indicated by the solid lines. In the attempt to rotate the load control rotatable arm 320G and the rotatable handle assembly 320, the operator must pull the safety knob 320A away from the rotatable arm 320G so that the safety pin 320B clears the linkage connecting plate 290D. The distance between the linkage connecting plate 290D and the load control rotatable arm 320G varies depending upon the position of the movable control lever 290. The positional relation between the safety pin 320B and the linkage connecting plate 290D will be further described in detail with respect to FIGURES 15, 16 and 18.

Now referring to FIGURE 15, a prospective view isolates the components of the previously described safety mechanisms for the load lock control and the hook engagement control in the first preferred embodiment according to the current invention. The movable control lever 290 is located in front of the rotatable handle assembly 320. As already described above with respect to FIGURES 11, 12, 13 and 14, the operator shifts the movable control lever 290 forward and backward in order to control the position of the hooks 270 via the linkages 294 through 298. As also previously described, the rotatable handle assembly 320 of a load control 500 is located adjacent to the load control movable lever 290 of the hook engagement control 400 and mechanically interacts with the engagement control 400. The rotatable load lock handle 320 of the load control 500 is at a predetermined lock position 320A as illustrated by the solid lines when the load control 500 is in a predetermined load lock state. That is, when rotatable load lock handle 320 of the load control 500 is in the load lock state, the load block plate 310 is placed at the predetermined load lock position as shown in the solid lines to secure the load.

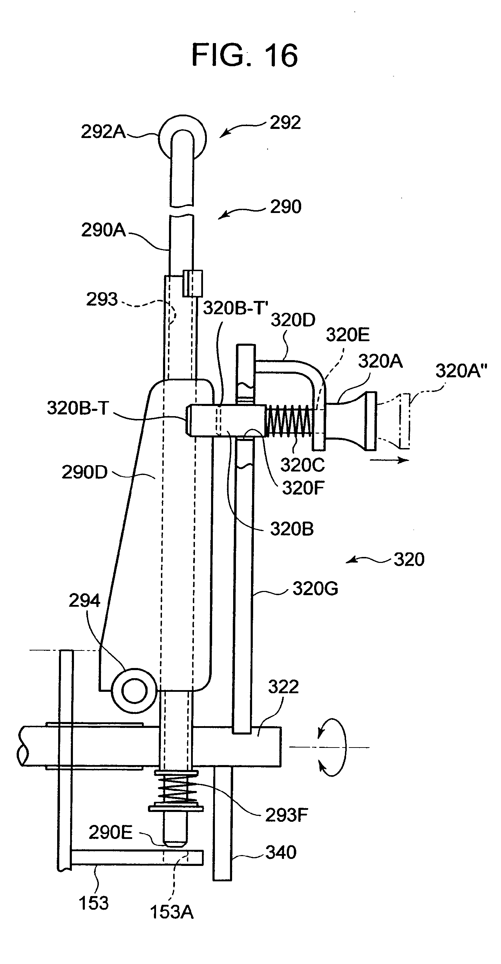

Still referring to FIGURE 15, on the other hand, when the operator rotates the rotatable load lock handle 320 as indicated by an arrow to a position 320A', the rotatable load lock handle 320 is at the predetermined load unlock position 320A' as illustrated by the dotted lines as the load control 500 transitions into a predetermined load unlock state. After the rotatable load lock handle 320 is rotated in the clockwise direction as indicated by an arrow to a rotated position 320A', the load block plate 310 is placed in the predetermined load unlock position 310A as indicated by the dotted lines. As the rotatable knob 320A reaches the rotated position 320A', a shift block plate or a disengagement block plate 340 as indicated by dotted lines is also placed at an upright position 340A adjacent to the linkage connecting plate 290D behind the movable control lever 290. As a part of the additional safety features, the above described rotation of the rotatable load lock handle assembly 320 depends upon the position of the engagement control movable lever 290 as will be described with respect to FIGURES 16, 17 and 18.

Now referring to FIGURE 16, a side view illustrates the interactive safety features between the load control and the engagement control in the first preferred embodiment according to the current invention. The isolated side view is seen from the side of the load carrying unit 200 as indicated by an arrow in FIGURE 7. Certain components are not discussed here since the description has been already provided with respect to FIGURE 14. As already described with respect to FIGURE 14, the rotatable knob 292 at the position 292A is in the engaged state, and the distal end 290E of the vertical portion 290A disengages itself from the bore 153A of the bottom plate 153. When the hook engagement control is in the engaged state, it is presumed that the load carrying unit 200 is securely engaged with a predetermined structure for delivering a load to the predetermined structure or retrieving a load from the predetermined structure. In other words, when the rotatable knob 292 of the engagement control is at the position 292A, the rotatable handle assembly 320 of the load control can be rotated. Based upon the above presumption, the operator is allowed to unlock the block plate or stopper 310 on the load carrying unit 200 as discussed with respect to FIGURE 10.

Still referring to FIGURE 16, safety features associated with the rotation of the rotatable load lock handle assembly 320 are further described for the first preferred embodiment according to the current invention. Despite the above presumption, when the operator actually attempts to rotate the rotatable load lock handle assembly 320, the first preferred embodiment provides additional safety features by forcing the operator to pull the load control knob 320A to a retracted position 320A" away from the linkage connecting plate 290D as indicated by an arrow. As the load control knob 320A is retracted to the retracted position 320A", the spring 320C is compressed against the bracket 320D, and the safety pin 320B also moves through the bore 320F in the same direction as indicated by an arrow. As a result of the above movement, a terminal end 320B-T of the safety pin 320B reaches its retracted position 320B-T' as indicated by the dotted line. At retracted position 320B-T', the safety pin 320B clears the linkage connecting plate 290D as the rotatable load lock handle assembly 320 is rotated around the linkage rod 322 as indicated by an arrow. Thus, despite the presumption on the hook engagement status, the additional feature forces the operator to ascertain safety by retracting the load control knob 320A while rotating the rotatable load lock handle assembly 320 to unlock the load stopper 310.

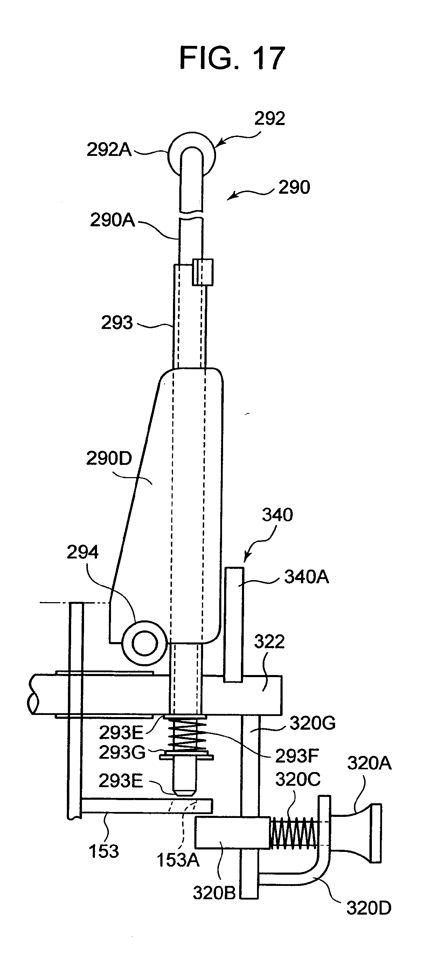

Now referring to FIGURE 17, a side view illustrates other interactive safety features between the load control and the engagement control in the first preferred embodiment according to the current invention. The isolated side view is seen from the side of the load carrying unit 200 as indicated by an arrow in FIGURE 7. Certain components are not discussed here since the description has been already provided with respect to FIGURE 14. As already described with respect to FIGURE 14, the rotatable knob 292 at the position 292A is in the engaged state, and the distal end 290E of the vertical portion 290A disengages itself from the bore 153A of the bottom plate 153. When the hook engagement control unit is in the engaged state, the operator is allowed to rotate the rotatable load lock handle assembly 320 as discussed with respect to FIGURE 16. After the rotatable load lock handle assembly 320 is rotated to the predetermined load unlock position, the load control is in the disengaged state. The load stopper 310 is now unlocked so that a load can be delivered from or retrieved to the load carrying unit 200 as discussed with respect to FIGURES 10 and 15.

Still referring to FIGURE 17, the isolated side view illustrates the load control in the disengaged state in relation to the engagement control in the engaged state in the first preferred embodiment according to the current invention. After the rotatable load lock handle assembly 320 is rotated to the predetermined load unlock position, the shift block plate 340 is placed at the upright position 340A adjacent to the linkage connecting plate 290D behind the movable control lever 290. At the predetermined load unlock position, the upright position 340A prohibits the movable control lever 290 from moving in the backward direction. In other words, the operator is prevented from shifting the movable control lever 290 into the disengaged state to place the hooks 270 in the predetermined disengaged position while the load control is in the disengaged state. This mechanism automatically ascertains safety during the load delivery or retrieval by preventing the operator from accidentally disengaging the hooks 270.

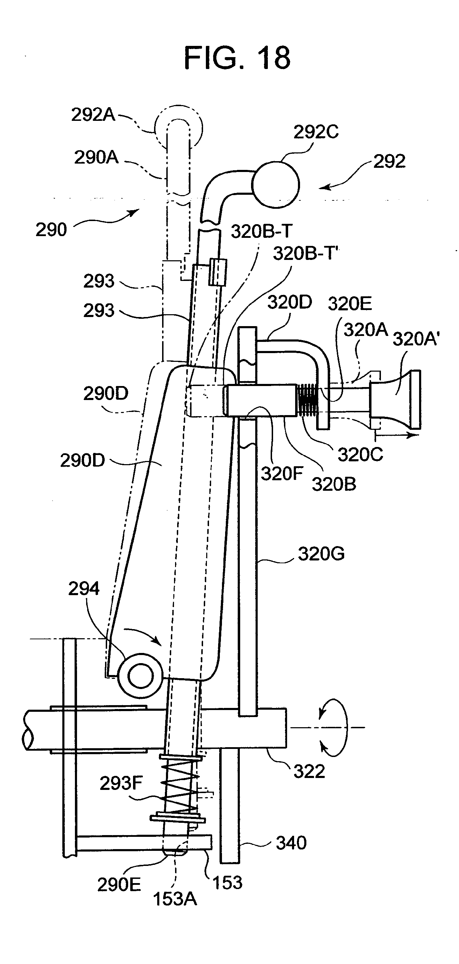

Now referring to FIGURE 18, a side view illustrates yet another interactive safety features between the load control and the engagement control in the first preferred embodiment according to the current invention. The isolated side view is seen from the side of the load carrying unit 200 as indicated by an arrow in FIGURE 7. Certain components are not discussed here since the description has been already provided with respect to FIGURE 14. As previously discussed with respect to FIGURE 16, despite the presumption on the hook engagement, the additional safety feature forces the operator to retract the load control knob 320A to the retracted position 320A" while rotating the rotatable load lock handle assembly 320 to a predetermined unlock position. This safety feature is further conditioned upon the position of the movable control lever 290 of the engagement control as will be described here.

Still referring to FIGURE 18, the side view illustrates the engagement control in the disengaged state to block the load control in the preferred embodiment according to the current invention. As previously described, the rotatable knob 292 rotates between the two positions 292A and 292C. At the position 292C, the rotatable knob 292 is in the disengaged state for placing the hooks in the predetermined disengaged position and is locked by the urging from the spring 293F so that the distal end 290E of the vertical portion 290A engages with a bore 153A of a bottom plate 153. At the position 292C, since the movable control lever 290 has shifted from the front position 292A to the backward position 292C to rotate around the linkage 294 in the direction indicated by an arrow, the physical distance to the rotatable handle arm 320G and the movable control lever 290 has been reduced.

While the engagement control is in the disengaged state as shown in solid lines, when the operator attempts to rotate the rotatable load lock handle assembly 320 of the load control by retracting the load control knob 320A to the retracted position 320A", yet additional safety feature blocks the rotation due to the reduced distance. Although the load control knob 320A is retracted to the retracted position 320A", the terminal end 320B-T of the safety pin 320B at its retracted position 320B-T' still fails to clear the linkage connecting plate 290D due to the reduced distance. In other words, the operator is not allowed to unlock the load unless the hooks are at the predetermined engaged position according to this safety feature.

Now referring to FIGUREA 19A and 19B, a flow chart illustrates steps involved in a preferred process of operating the safety enhanced load carrying device according to the current invention. The acts or steps are described in relation to the components, units and mechanisms of the first preferred embodiment according to the current invention. Thus, the reference to these components in the first preferred embodiment is made with respect to FIGURES 5 through 18. In the preferred process, for example, a predetermined load M such as a battery is delivered to or retrieved from a desired destination structure such as a forklift 410 via the safety enhanced load carrying device of the current invention as shown in FIGURE 10.

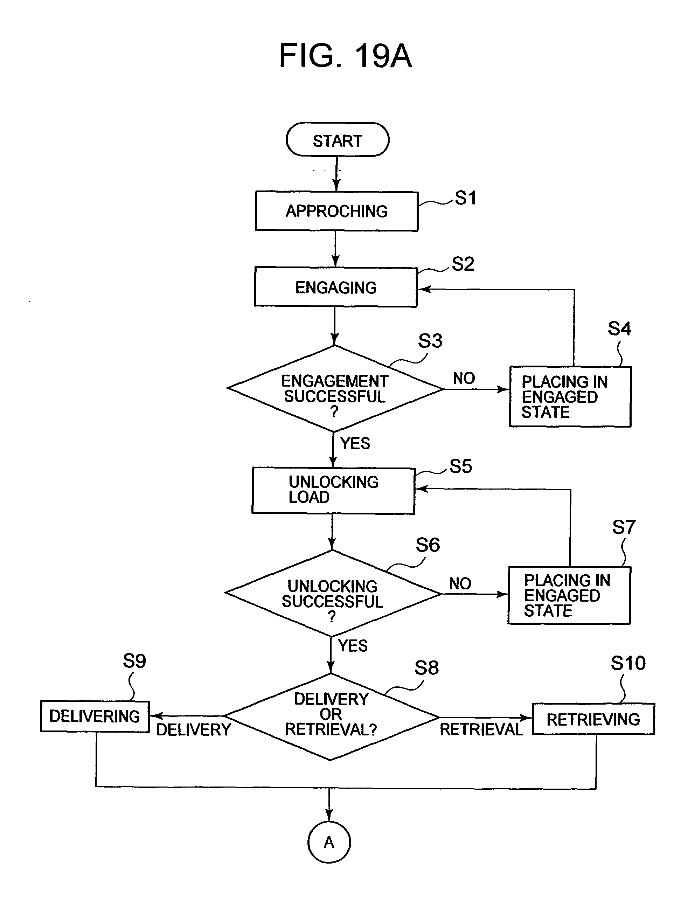

Now referring to FIGURE 19A, in a step S1, the operator moves the safety enhanced load carrying device towards the predetermined destination. The operator attempts to engage the load carrying unit 200 with the predetermined structure in a step S2. As the load transporting unit 100 and the load carrying unit 200 approach the predetermined structure in the step S1, the guide pin 330 is aimed at the corresponding receiving structure 430 on the forklift 410 so that the appropriate engagement between the hooks 270 and the hook engagement unit 420 is attempted in the step S2 as illustrated in FIGURE 10. In a step S3, it is determined whether or not the appropriate engagement is successfully completed. If it is determined in the step S3 that the engagement is successfully completed between the hooks 270 and the hook engagement unit 420, the preferred process proceeds to a step S5. On the other hand, if it is determined in the step S3 that the engagement is not successfully completed, it is ascertained in a step S4 that the engagement control is in the engaged state. In other words, as described with respect to FIGURE 11, in order to successfully conclude the hook engagement, the movable control lever 290 of the engagement control must be in the engaged state. Then, the preferred process proceeds back to the step S2 to continue the engagement attempt as described above.

Still referring to FIGURE 19A, the preferred process continues to accomplish the rest of the steps according to the current invention. Upon successfully completing the hook engagement, the operator attempts to unlock the load in the step S5 by rotating the rotatable load lock handle assembly 320 of the load control while retracting the load control knob 320A to the retracted position 320A". Here, unlocking the load does not necessarily mean that the load must exist in the load carrying surface 200S. Rather, the same phrase is used to mean that the load block plate 310 is successfully released from the load carrying surface 200S. The attempt is determined in a step S6 whether or not the load block plate 310 is successfully released from the load carrying surface 200S. If it is determined in the step S6 that the load control is successfully placed in the load unlock state, the preferred process proceeds to a step S8. On the other hand, if it is determined in the step S6 that the load control is not successfully placed in the load unlock state, the preferred process proceeds to a step S7, where the operator ascertains that the engagement control is in the engaged state. In other words, as described with respect to FIGURE 18, if the movable control lever 290 of the engagement control is in the disengaged position, the linkage connecting plate 290D prohibits the rotation of the rotatable load lock handle assembly 320 to the load unlock position. Following the step S7, the preferred process repeats the step S5.

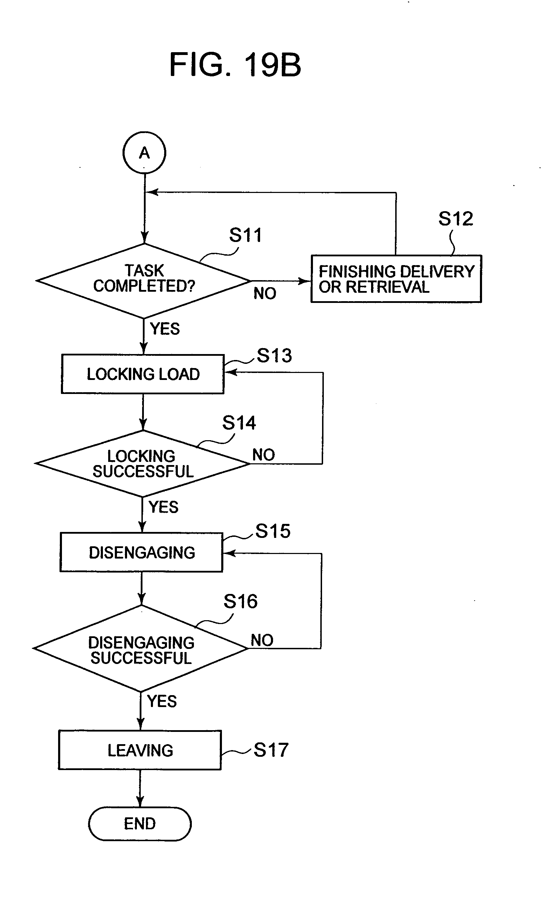

After confirming that the hooks 270 are engaged and the load block plate 310 is placed out of the load carrying surface 200S, the predetermined task is performed. In a step S8, it is determined that the predetermined task is either delivery or retrieval of the load. If it is determined in the step S8 that the predetermined task is a delivery task, a step S9 is performed to deliver the load from the battery carrying surface 200S of the load carrying unit 200 to a predetermined battery bay of the forklift 410. On the other hand, if it is determined in the step S8 that the predetermined task is a retrieval task, a step S10 is performed to retrieved the battery from the predetermined battery bay of the forklift 410 onto the load carrying surface 200S of the load carrying unit 200. After performing the predetermined task, the preferred process now prepares for the disengagement as illustrated in FIGURE 19B.

Now referring to FIGURE 19B, the flow chart illustrates steps that follow the above described predetermined task according to the current invention. It is determined in a step S11 whether or not the preferred process has completed the predetermined retrieval or delivery task. If the step 11 determines that the predetermined task has not been completed, the preferred process waits at the step 11. On the other hand, the predetermined task is completed, the preferred process proceeds to a step S13. For example, upon confirming the appropriate retrieving position M' of the retrieved battery, the operator secures the battery pack M on the load carrying units 200 by rotating the rotatable handle 320 in the counterclockwise direction so that the load block plate 310 is placed at the front end of the load holding surface 200S for blocking the forward movement of the battery pack M.

Still referring to FIGURE 19B, the preferred process performs the steps associated with further safety according to the invention. The preferred process determines in a step S14 whether or not the locking step S13 is completed. If it is determined in the step S14 that the locking step S13 has not successfully completed, the preferred process goes back to the step S13, where the operator repeats the load locking task. However, if the step S6 has been successfully completed, the shift block plate 340 of the load control is at the upright position behind the linkage connecting plate 290D to prevent the movable control lever 290 of the engagement control from shifting backward into the disengaged state. For this reason, the load locking step S13 should be always successfully determined in the step S14.

After the successful load locking task in the S14, the operator is ready to disengage the hooks 270 from the forklift 410. After successfully locking the load in the step S14, the operator attempts to shift the movable control lever 290 of the engagement control in the backward direction into the disengaged state in a step S15. It is determined in a step S16 whether or not the disengagement task is successfully completed. If it is determined in the step S16 that the disengaging step S15 has not successfully completed, the preferred process goes back to the step S15, where the operator repeats the hook disengaging task. However, if the step S13 has been successfully completed, the shift block plate 340 of the load control is placed away from the upright position behind the linkage connecting plate 290D and no longer prevents the movable control lever 290 of the engagement control from shifting backward into the disengaged state. For this reason, the disengaging step S15 should be always successfully determined in the step S16. Finally, the disengaged load carrying unit 200 with the load block plate 310 in the load lock position is moved away from the forklift 410 in a step S17. Then, the preferred process terminates.

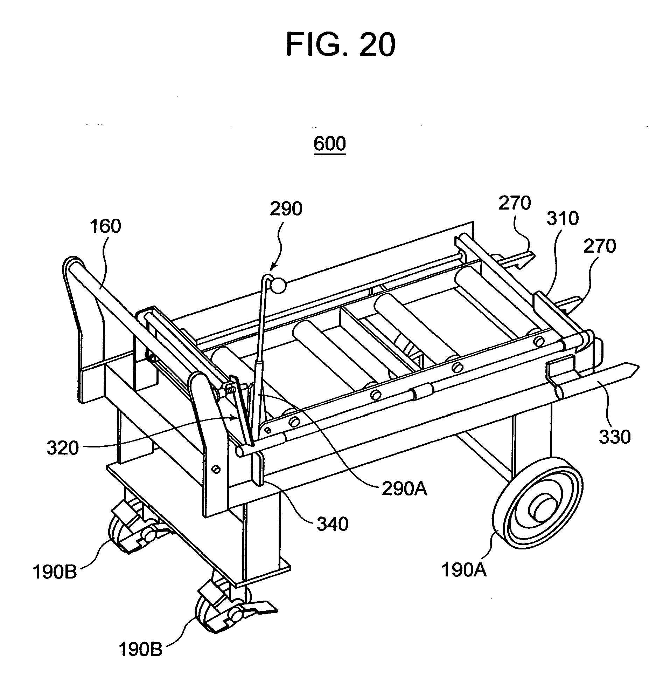

Lastly, referring to FIGURE 20, a prospective view illustrates a second preferred embodiment of the safety enhanced load carrying device 600 according to the current invention. Generally, the load carrying portion is integrated with the load transporting portion by fixedly placing the load carrying portion on top of the load transporting portion. The front side of the load carrying portion having the hooks 270 and the guide pin 330 is placed on a far side away from the handle 160. This is because this far side is placed near a predetermined structure so that the guide pin 330 will guide the safety enhanced load carrying device 600 to a predetermined structure. For example, the guide pin 330 will guide to a desired position by being inserted into a complementary hole on the predetermined structure. Unlike the first preferred embodiment, the second preferred embodiment lacks the height adjustment mechanism. Thus, the guide pin 330 maintains the same height with respect to the ground. As safety enhanced load carrying device 600 arrives the predetermined structure, the hooks 270 engage with a certain portion of the predetermined structure.

The back side of the safety enhanced load carrying device 600 has the movable control 290 and the load control rotatable handle 320 near side of the handle 160 of the safety enhanced load carrying device 600. This side is a control side which should be accessible to the operator, and the operator controls the moving direction of safety enhanced load carrying device by steering the handle 160 towards the desired structure via the front wheels 190A and the rear wheels 190B. Upon arriving at the desired structure, the rear wheels 190B are locked to park the safety enhanced load carrying device 600. The operator then controls the safety features such as the hook engagement by the movable control lever 290 and the load locking by the rotatable handle 320. Since the operator is standing away from the moving load and has easy access to all of the controls, the safety is further promoted. The safety features of the second preferred embodiment are substantially identical to those of the first preferred embodiment except for the features associated with joining the load transporting unit 100 and the load carrying unit 200 of the first preferred embodiment. For this reason, the safety features of the second preferred embodiment are not reiterated for the movable control lever 290, the rotatable handle 320, the load block plate 310, the shift block plate 340, the linkage connecting plate 290D, the hooks 270 and their interactions.

The above description of the first and second embodiments is given for the mechanical implementation. However, some safety features of the current invention are implemented in an alternative embodiment using electronic components including microprocessors, sensors and or software to control the activation of the movement, timing and tracking the status

It is to be understood, however, that even though numerous characteristics, features and advantages of the present invention have been set forth in the foregoing description, together with details of the structure and function of the invention, the disclosure is illustrative only, and that although changes may be made in detail, especially in matters of shape, size and arrangement of parts, as well as implementation of the control mechanism in software, hardware, or a combination of both, the changes are within the principles of the invention to the full extent indicated by the broad general meaning of the terms in which the appended claims are expressed.

The safety of a load carrying device has been enhanced by providing interactive mechanisms to ascertain the operations in predetermined manner. The enhanced safety mechanisms interactively force the operator to ascertain safety while an object such as a battery is loaded onto or unloaded from a predetermined structure such an industrial vehicle. The carrying device is engaged with the industrial vehicle during the loading or unloading task. In addition, the object is locked during the transportation. These safety features are mechanically ascertained.

## Claims

1. A safety device for carrying a load to a predetermined structure, comprising:
a load carrying unit for holding the load;
an engagement control located on said load carrying unit for engaging said load carrying unit with the predetermined structure in an engaged state and for disengaging said load carrying unit from the predetermined structure in a disengaged state; and
a load control located on said load carrying unit for locking the load on said load carrying unit in a load lock state, said load control unlocking the load on said load carrying unit in a load unlock state, said engagement control in the engaged state allowing said load control to transition into the load unlock state from the load lock state, said engagement control in the disengaged state prohibiting said load control from transitioning into the load unlock state from the load lock state.

2. The safety device for carrying a load according to claim 1 wherein said load control in the load lock state allowing said engagement control to transition into the disengaged state from the engaged state, said load control in the load unlock state prohibiting said engagement control from transitioning into the disengaged state from the engaged state.

3. The safety device for carrying a load according to claim 1 wherein said load carrying unit further comprises:
hooks connected to said engagement control for engaging said load carrying unit with the predetermined structure in a complementary manner at a predetermined engaged position in the engaged state and for disengaging said load carrying unit from the predetermined structure at a predetermined disengaged position in the disengaged state;
a load holding surface located on said load carrying unit for placing the load; and
legs connected to said load holding surface for positioning said load holding surface at a predetermined height to create a ground clearance space.

4. The safety device for carrying a load according to claim 3 further comprising a load transporting unit for detachably engaging with said load carrying unit, said load transporting unit transporting said load carrying unit and vertically lifting said load carrying unit.

5. The safety device for carrying a load according to claim 4 wherein said load transporting unit and said load carrying unit each further comprise a mutually fitting area for securing the detachable engagement in a complementary manner during the transport.

6. The safety device for carrying a load according to claim 4 wherein said load transporting unit further includes a fork insertion part for inserting into the ground clearance space of said load carrying unit.

7. The safety device for carrying a load according to claim 3 wherein said engagement control further includes:
a movable control lever movable between a predetermined control engaged position and a predetermined control disengaged position and mechanically connected to said hooks for positioning said hooks at one of the predetermined engaged position and the predetermined disengaged position; and
a rotatable knob located on said movable control lever for locking said movable control lever at the predetermined disengaged position.

8. The safety device for carrying a load according to claim 7 wherein said load control further includes:
a load block plate connected to said load control and movably located at a certain position to physically prevent the load from moving on said load carrying unit;
a rotatable handle mechanically connected to said load block plate for placing said load block plate above said load holding surface at a predetermined load lock position while said load control is in the load lock state, said rotatable handle placing said load block plate out of said load holding surface at a predetermined load unlock position while said load control is in the load unlock state; and
a disengagement block plate mechanically connected to said rotatable handle for being placed adjacent to said movable control lever for preventing said movable control lever from moving out of the predetermined control engaged position while said load control is in the load unlock state, said disengagement block plate being placed away from said movable control lever to the predetermined control disengaged position for freeing said movable control lever while said load control is in the load lock state.

9. The safety device for carrying a load according to claim 8 further comprising:
a rotation preventing plate located on said movable control lever; and
a retractable knob located on said rotatable handle and having a safety pin extending beyond said rotation preventing plate, said retractable knob retracting the safety pin to a predetermined retracted position for allowing said rotatable handle to rotate beyond said rotation preventing plate only when said movable control lever is at the predetermined control engage position while said engagement control is in the engaged state, said rotation preventing plate preventing said rotatable handle from rotating despite the safety pin at the predetermined retracted position when said movable control lever is placed in the predetermined control disengaged position while said engagement control is in the disengaged state.

10. The safety device for carrying a load according to claim 1 wherein said load carrying unit further comprises a position guide located at one end of said load carrying unit for guiding said load carrying unit to the predetermined structure.

11. The safety device for carrying a load according to claim 1 wherein said load transporting unit is an existing hand truck.

12. The safety device for carrying a load according to claim 1 wherein said load transporting unit is a hand pallet carrier.

13. The safety device for carrying a load according to claim 1 wherein said load carrying unit carries a battery to be transported to and from an automobile.

14. The safety device for carrying a load according to claim 1 wherein said engagement control electronically activates the engaged state and the disengaged state, said load control electronically activating the load lock state and the load unlock state.

15. A safety device for carrying a load to a predetermined structure, comprising:
a load carrying unit for holding the load;
an engagement control located on said load carrying unit for engaging said load carrying unit with the predetermined structure in an engaged state and for disengaging said load carrying unit from the predetermined structure in a disengaged state; and
a load control located on said load carrying unit for locking the load on said load carrying unit in a load lock state, said load control unlocking the load on said load carrying unit in a load unlock state, said load control in the load lock state allowing said engagement control to transition into the disengaged state from the engaged state, said load control in the load unlock state prohibiting said engagement control from transitioning into the disengaged state from the engaged state.

16. The safety device for carrying a load according to claim 15 wherein said engagement control in the engaged state allowing said load control to transition into the load unlock state from the load lock state, said engagement control in the disengaged state prohibiting said load control from transitioning into the load unlock state from the load lock state.

17. The safety device for carrying a load according to claim 16 wherein said load carrying unit further comprises:
hooks connected to said engagement control for engaging said load carrying unit with the predetermined structure in a complementary manner at a predetermined engaging position in the engaged state and for disengaging said load carrying unit from the predetermined structure at a predetermined disengaging position in the disengaged state;
a load holding surface located on said load carrying unit for placing the load; and
legs connected to said load holding surface for positioning said load holding surface at a predetermined height to create a ground clearance space.

18. The safety device for carrying a load according to claim 17 further comprising a load transporting unit for detachably engaging with said load carrying unit, said load transporting unit vertically lifting said load carrying unit and transporting said load carrying unit.

19. The safety device for carrying a load according to claim 18 wherein said load transporting unit and said load carrying unit each further comprise a mutually fitting area for securing the detachable engagement in a complementary manner during the transport.

20. The safety device for carrying a load according to claim 18 wherein said load transporting unit further includes a fork insertion part for inserting into the ground clearance space of said load carrying unit.

21. The safety device for carrying a load according to claim 17 wherein said engagement control further includes:
a movable control lever movable between a predetermined control engaged position and a predetermined control disengaged position and mechanically connected to said hooks for positioning said hooks at either one of the predetermined engaged position and the predetermined disengaged position; and
a rotatable knob located on said movable control lever for locking said movable control lever at the predetermined disengaging position.

22. The safety device for carrying a load according to claim 21 wherein said load control further includes:
a load block plate connected to said load control and movably located at a certain position to physically prevent the load from moving;
a rotatable handle mechanically connected to said load block plate for placing said load block plate above said load holding surface at a predetermined load lock position in the load lock state and out of said load holding surface at a predetermined load unlock position in the load unlock state; and
a disengagement block plate connected to said rotatable handle for being placed adjacent to said movable control lever for preventing said movable control lever from moving out of the predetermined control engaged position while said load control is in the load unlock state, said disengagement block plate being placed away from said movable control lever to the predetermined disengaged control position for freeing said movable control lever while said load control is in the load lock state.

23. The safety device for carrying a load according to claim 22 further comprising:
a rotation preventing plate located on said movable control lever; and
a retractable knob located on said rotatable handle and having a safety pin extending beyond said rotation preventing plate, said retractable knob retracting the safety pin to a predetermined retracted position for allowing said rotatable handle to rotate beyond said rotation preventing plate only when said movable control lever is at the predetermined engaging position while said engagement control is in the engaged state, said rotation preventing plate preventing said rotatable handle from rotating despite the safety pin at the predetermined retracted position when said movable control lever is placed in the predetermined disengaging position while said engagement control is in the disengaged state.

24. The safety device for carrying a load according to claim 15 wherein said load carrying unit further comprises a position guide located at one end of said load carrying unit for guiding said load carrying unit to the predetermined structure.

25. The safety device for carrying a load according to claim 15 wherein said load transporting unit is an existing hand truck.

26. The safety device for carrying a load according to claim 15 wherein said load transporting unit is a hand pallet carrier.

27. The safety device for carrying a load according to claim 15 wherein said load carrying unit carries a battery to be transported to and from an automobile.

28. The safety device for carrying a load according to claim 15 wherein said engagement control electronically activates the engaged state and the disengaged state, said load control electronically activating the load lock state and the load unlock state.

29. A method of operating a safety device for carrying a load, comprising the steps of:
a) engaging a load carrying unit with a predetermined structure so that an engagement control to be in an engaged state;
b) placing a load control in a load unlock state while the engagement control is in the engaged state;
c) performing a predetermined task with respect to the load;
d) preventing the engagement control from transitioning to the disengaged state from the engaged state during said steps b) and c);
e) placing the load control in a load lock state upon completing said step c) while the engagement control is still in the engaged state; and
f) disengaging the load carrying unit from the predetermined structure so that the engagement control is in a disengaged state only after said step e).

30. The method of operating a safety device for carrying a load according to claim 29 wherein the predetermined task is to deliver the load from the load carrying unit to the predetermined structure.

31. The method of operating a safety device for carrying a load according to claim 29 wherein the predetermined task is to retrieve the load to the load carrying unit from the predetermined structure.

32. The method of operating a safety device for carrying a load according to claim 29 wherein said load carrying unit engages with the predetermined structure of an automobile in a complementary manner via hooks at a predetermined engaged position while the engagement control is in the engaged state and disengages from the predetermined structure via the hooks at a predetermined disengaged position while the engagement control is in the disengaged state.

33. The method of operating a safety device for carrying a load according to claim 32 wherein said steps a) and f) respectively include an additional step of mechanically positioning the hooks at the predetermined engaged position and the predetermined disengaged position.

34. The method of operating a safety device for carrying a load according to claim 29 further comprising an additional steps of:
g) placing the load on a load holding surface;
h) detachably fixing the load carrying unit on a load transporting unit at a mutually fitting area in a complementary manner; and
i) transporting the load on the load carrying unit and the load transporting unit.

35. The method of operating a safety device for carrying a load according to claim 34 further include additional steps of:
j) rotating a rotatable handle in one direction to a predetermined load unlock position to mechanically place a load block plate out of the load holding surface to free the load so that the load control is in the load unlock state;
k) simultaneously with said step j), placing a disengagement block plate at a predetermined engagement blocking position;
l) preventing the hooks from disengaging by the disengagement block plate; and
m) rotating the rotatable handle in the other direction to a predetermined load lock position so that the load block plate is placed onto the load holding surface for preventing the load from moving in the load lock state.

36. The method of operating a safety device for carrying a load according to claim 35 further includes additional steps of:
n) automatically placing a rotation preventing plate near the rotatable handle for preventing the rotatable handle from rotating as the hooks are being placed in the predetermined disengaged position;
o) automatically placing the rotation preventing plate away from the rotatable handle for allowing the rotatable handle to rotate as the hooks are being placed in the predetermined engaged position; and
p) rotating the rotatable handle while pulling a retractable pin that extends beyond the rotation preventing plate, the retractable pin being sufficiently retracted to allow the rotatable handle to rotate beyond the rotation preventing plate only after said step o).

37. The method of operating a safety device for carrying a load according to claim 29 further comprising an additional step of guiding the load carrying unit to the predetermined structure via a position guide.

38. The method of operating a safety device for carrying a load according to claim 34 wherein the load transporting unit is an existing hand truck.

39. The method of operating a safety device for carrying a load according to claim 34 wherein the load transporting unit is a hand pallet carrier.

40. The method of operating a safety device for carrying a load according to claim 29 wherein the load carrying unit carries a battery to be transported to and from an automobile.

41. The method of operating a safety device for carrying a load according to claim 29 wherein the engaged state and the disengaged state are electronically activated.

42. The method of operating a safety device for carrying a load according to claim 29 wherein the load lock state and the load unlock state are electronically activated.

43. A method of operating a safety device for carrying a load to a predetermined structure, comprising the steps of:
a) engaging a load carrying unit with the predetermined structure so that an engagement control to be in an engaged state;
b) placing a load control in a load unlock state while the engagement control is in the engaged state;
c) performing a predetermined task with respect to the load;
d) placing the load control in a load lock state upon completing said step c) while the engagement control is still in the engaged state;
e) disengaging the load carrying unit from the predetermined structure so that the engagement control is in a disengaged state only after said step d);
f) transporting the load carrying unit to a predetermined destination from the predetermined structure while the load control in the load lock sate; and
g) preventing the load control from transitioning to the load unlock state from the load lock state after said step e) and during said step f).

44. The method of operating a safety device for carrying a load according to claim 43 wherein the predetermined task is to deliver the load from the load carrying unit to the predetermined structure.

45. The method of operating a safety device for carrying a load according to claim 43 wherein the predetermined task is to retrieve the load to the load carrying unit from the predetermined structure.

46. The method of operating a safety device for carrying a load according to claim 43 wherein said load carrying unit engages with the predetermined structure of an automobile in a complementary manner via hooks at a predetermined engaged position while the engagement control is in the engaged state and disengages from the predetermined structure via the hooks at a predetermined disengaged position while the engagement control is in the disengaged state.

47. The method of operating a safety device for carrying a load according to claim 46 wherein said steps a) and e) respectively include an additional step of mechanically positioning the hooks at the predetermined engaged position and the predetermined disengaged position.

48. The method of operating a safety device for carrying a load according to claim 43 further comprising an additional steps of:
h) placing the load on a load holding surface;
i) detachably fixing the load carrying unit on a load transporting unit at a mutually fitting area in a complementary manner; and
j) transporting the load on the load carrying unit and the load transporting unit.

49. The method of operating a safety device for carrying a load according to claim 48 further include additional steps of:
k) rotating a rotatable handle in one direction to a predetermined load unlock position to mechanically place a load block plate out of the load holding surface to free the load so that the load control is in the load unlock state;
l) simultaneously with said step k), placing a disengagement block plate at a predetermined engagement blocking position;
m) preventing the hooks from disengaging by the disengagement block plate; and
n) rotating the rotatable handle in the other direction to a predetermined load lock position so that the load block plate is placed onto the load holding surface for preventing the load from moving in the load lock state.

50. The method of operating a safety device for carrying a load according to claim 49 further includes additional steps of:
o) automatically placing a rotation preventing plate near the rotatable handle for preventing the rotatable handle from rotating as the hooks are being placed in the predetermined disengaged position;
p) automatically placing the rotation preventing plate away from the rotatable handle for allowing the rotatable handle to rotate as the hooks are being placed in the predetermined engaged position; and
q) rotating the rotatable handle while pulling a retractable pin that extends beyond the rotation preventing plate, the retractable pin being sufficiently retracted to allow the rotatable handle to rotate beyond the rotation preventing plate only after said step p).

51. The method of operating a safety device for carrying a load according to claim 43 further comprising an additional step of guiding the load carrying unit to the predetermined structure via a position guide.

52. The method of operating a safety device for carrying a load according to claim 48 wherein the load transporting unit is an existing hand truck.

53. The method of operating a safety device for carrying a load according to claim 48 wherein the load transporting unit is a hand pallet carrier.

54. The method of operating a safety device for carrying a load according to claim 43 wherein the load carrying unit carries a battery to be transported to and from an automobile.

55. The method of operating a safety device for carrying a load according to claim 43 wherein the engaged state and the disengaged state are electronically activated.

56. The method of operating a safety device for carrying a load according to claim 43 wherein the load lock state and the load unlock state are electronically activated.

57. A safety load carrying device for carrying a load to be used with an existing load transferring device, comprising:
a retrofitting load carrying unit for holding the load and having a retrofitting portion for retrofitting the existing load transferring device;
an engagement control unit located on said retrofitting load carrying unit for engaging said retrofitting load carrying unit with the predetermined structure in an engaged state and for disengaging said retrofitting load carrying unit from the predetermined structure in a disengaged state; and
a load control located on said retrofitting load carrying unit for locking the load on said retrofitting load carrying unit in a load lock state, said load control unlocking the load on said retrofitting load carrying unit in a load unlock state, said engagement control in the engaged state allowing said load control to transition into the load unlock state from the load lock state, said engagement control in the disengaged state prohibiting said load control from transitioning into the load unlock state from the load lock state.

58. The safety load carrying device for carrying a load according to claim 57 wherein said load control in the load lock state allowing said engagement control to transition into the disengaged state from the engaged state, said load control in the load unlock state prohibiting said engagement control from transitioning into the disengaged state from the engaged state.

59. The safety load carrying device for carrying a load according to claim 57 wherein said retrofitting load carrying unit further comprises a load holding surface and legs connected to said load holding surface for positioning said load holding surface at a predetermined height to create a ground clearance space.

60. The safety load carrying device for carrying a load according to claim 57 wherein said retrofitting load carrying unit detachably engages with the existing load transferring device in the ground clearance space via said legs.

61. A safety load carrying device for carrying a load to be used with an existing load transferring device, comprising:
a retrofitting load carrying unit for holding the load and having a retrofitting portion for retrofitting the existing load transferring device;
an engagement control unit located on said retrofitting load carrying unit for engaging said retrofitting load carrying unit with the predetermined structure in an engaged state and for disengaging said retrofitting load carrying unit from the predetermined structure in a disengaged state; and
a load control located on said retrofitting load carrying unit for locking the load on said retrofitting load carrying unit in a load lock state, said load control unlocking the load on said retrofitting load carrying unit in a load unlock state, said load control in the load lock state allowing said engagement control to transition into the disengaged state from the engaged state, said load control in the load unlock state prohibiting said engagement control from transitioning into the disengaged state from the engaged state.

62. The safety load carrying device for carrying a load according to claim 61 wherein said engagement control in the engaged state allowing said load control to transition into the load unlock state from the load lock state, said engagement control in the disengaged state prohibiting said load control from transitioning into the load unlock state from the load lock state.

63. The safety load carrying device for carrying a load according to claim 61 wherein said retrofitting load carrying unit further comprises a load holding surface and legs connected to said load holding surface for positioning said load holding surface at a predetermined height to create a ground clearance space.

64. The safety load carrying device for carrying a load according to claim 61 wherein said retrofitting load carrying unit detachably engages with the existing load transferring device in the ground clearance space via said legs.
